# EUROPÄISCHE PATENTSCHRIFT

(11) **EP 1 743 690 B1**
(45) Veröffentlichungstag und Bekanntmachung des Hinweises auf die Patenterteilung: **10.12.2008**
(21) Anmeldenummer: 06116960.3
(22) Anmeldetag: 11.07.2006
(51) Int. Cl.: B01D 63/04, B01D 65/00

(54) **Filtrationsanlage mit mehreren vertikal in Reihe angeordneten Filtrationsmodulen**
Filtration unit with multiple vertical filtration modules in row
Unité de filtration avec plusieurs modules verticaux en ligne

(30) Priorität: 11.07.2005 DE 102005032286
(43) Veröffentlichungstag der Anmeldung: 17.01.2007
(73) Patentinhaber: Inge AG, 86926 Greifenberg (DE)
(72) Erfinder: Berg, Peter, 86919 Utting (DE); Winkler, Roland, 86889 Landsberg (DE); Wunram, Josef, 86899 Landsberg (DE)
(74) Vertreter: Kietzmann, Lutz

(56) Entgegenhaltungen:
- WO-A-91/16124
- DE-U-5202004 002 83
- US-A- 5 342 518
- US-A1- 2003 038 075

## Beschreibung

Die vorliegende Erfindung betrifft eine Filtrationsanlage mit mehreren vertikal in Reihe angeordneten Filtrationsmodulen, an deren beiden Stirnseiten je ein Zulauf für die zu filtrierende Flüssigkeit angeordnet ist, die in je zugeordneten sich längs erstreckenden Sammelleitungen münden, wobei jedes Filtrationsmodul mindestens einen Ablauf für das Filtrat aufweist, welche in eine Filtratsammelleitung münden.

Das Einsatzgebiet derartiger Filtrationsanlagen erstreckt sich von Einrichtungen der Wasser-und Abwasseraufbereitung bis hin zu Industrieanlagen. Durch die Filtration werden je nach Membrantyp Flüssigkeiten - insbesondere Wasser - von Partikeln und gelösten Substanzen befreit. Es ist auch eine Abtrennung gelöster Stoffe - wie Salze - möglich. Das Filtrationsverfahren ist einfach und sicher durchzuführen, ohne Zusatz von Chemikalien und mit geringem Energieaufwand. Zum Einsatz kommen sogenannte Filtrationsmodule, welche üblicherweise aus länglichen Hohlzylindern als Gehäuse bestehen, die zur Unterbringung von Filtrationsmembranen dienen. Moderne Filtrationsmembranen besitzen beispielsweise mehrere einzelne poröse Kapillaren oder Flachmembranen. Die zu filtrierende Flüssigkeit wird im Fall von Kapillarmembranen in diese hineingepresst. Durch die porösen Kapillarwandungen dringt dann die filtrierte Flüssigkeit hindurch. Ein Filtrationsmodul enthält ein Bündel vieler einzelner solcher Filtrationsmembranen. In der Regel wird das Filtrationsmodul in eine Rohrleitung eingebunden, durch welche die zu filtrierende Flüssigkeit fließt. In der erfindungsgegenständlichen Filtrationsanlage werden mehrere solcher Filtrationsmodule parallel geschaltet, um den erwünschten Durchflusswert zu erreichen. Es kann auch die umgekehrte Fließrichtung zur Reinigung betrieben werden. Neben Kapillarmembranen kommen auch Flachmembranen zum Einsatz.

Aus dem Prospektblatt "Referenz-Wasserwerk Partenstein" (inge AG, 2003) geht eine gattungsgemäße Filtrationsanlage hervor. In einem Gestell sind die einzelnen Filtrationsmodule vertikal nebeneinander angeordnet. Stimseitig jedes Filtrationsmoduls ist dieses mit einer zylinderförmigen Kappe verschlossen, von wo aus je ein Verbindungsrohr quer abgeht, welches in längs der Reihe der Filtrationsmodule verlaufende Sammelleitungen mündet. Nachteilig hierbei ist, dass dieser Aufbau einer Filtrationsanlage einen recht großen Platzbedarf erfordert und es sind recht viele Verbindungsbauteile - wie Rohrkupplungen - erforderlich, um die quer abgehenden Verbindungsrohre mit der zugeordneten Sammelleitung zu verbinden.

Aus der DE 20 2004 002 835 U1 geht eine andere Filtrationsanlage hervor, deren je stirnseitig der horizontalen Filtrationsmodule angeordneten Verbindungsrohre koaxial abgehen und über einen Knick zu jeweils zentralen Sammelleitungen führen. Zur Überleitung zwischen dem Filtrationsmodul und des koaxial abgehenden Verbindungsrohres kleineren Durchmessers sind trichterartige Endkappen vorgesehen, welche über Rohrkupplungen am Filtrationsmodul befestigt sind. Auch diese Verbindungslösung erfordert recht viele einzelnen Bauteile, welche aufwendig zu montieren sind.

Aus der WO 91/16124 geht eine Filtrationsanlage hervor, welche einen hohen Kompaktheitsgrad aufweist. Der hohe Kompaktheitsgrad wird dadurch erreicht, dass die abflussseitige Filtratsammelleitung innerhalb der zuflussseitigen Sammelleitungen integriert wird. Nachteilhaft ist, dass bei Montage dieser Filtrationsanlage besonders darauf zu achten ist, dass die Verbindungsstellen von nicht sichtbaren Filtratsammelleitungsanschlüssen dicht sind. Leckagen lassen sich hier nur schwer feststellen.

Die US 2003/0038075 A1 offenbart eine Filtrationsanlage, bei welcher die ablaufseitigen Filtratsamznelleitungen neben den Filtrationsmodulen verlaufen. Bei der Anordnung in einem Rack verlaufen die Filtratsammelleitungen zwischen den Reihen von Filtrationsmodulen, so dass die gesamte Filtrationsanlage recht breitbauend ausfällt. Zudem sind die Sammelleitungen zur Zuführung der zu filtrierenden Flüssigkeit um das gesamte Rack herum angeordnet.

Aus der US 5,342,518 geht eine Filtrationsanlage hervor, die ausschließlich über ein Rohrleitungssystem mit oberen zulaufseitigen Sammelleitungen und unteren ablaufseitiges Filtratsammelleitungen angeschlossen ist. Eine durch dieses Anschlussschema erzeugte Rackanordnung besitzt im Vergleich zur gattungsgenläßen Filtrationsanlage einen recht geringen Filtratdurchsatz.

Es ist die Aufgabe der vorliegenden Erfindung, eine Filtrationsanlage der vorstehend beschriebenen Art dahingehend weiterzuverbessern, dass mit wenigen und einfach zu montierenden Bauteilen eine platzsparende Konstruktion realisiert wird.

Die Aufgabe wird ausgehend von einer Filtrationsanlage gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass entlang der Stirnseiten jeder Reihe von Filtrationsmodulen eine Sammelleitung verläuft, die jeder Stirnseite der Filtrationsmodule zugeordnete Abzweige aufweist, über welche das hier zugeordnete Filtrationsmodul direkt anschließbar ist.

Der Vorteil der erfindungsgemäßen Lösung liegt insbesondere darin, dass auf separate Verbindungsteile zwischen den Filtrationsmodulen und den Sammelleitungen gänzlich verzichtet werden kann. Je eine Sammelleitung ist den Stirnseiten einer Reihe von Filtrationsmodulen zugeordnet. Sind beispielsweise zwei Reihen von vertikalen Filtrationsmodulen vorgesehen, so erfordert die erfindungsgemäße Lösung insgesamt vier Sammelleitungen, welche an einem Ende zu einer Hauptsammelleitung zusammengeführt werden. Der Montageaufwand verringert sich entsprechend.

Gemäß einer weiteren, die Erfindung verbessernden Maßnahme ist vorgesehen, dass neben jeder Reihe an Filtrationsmodulen eine zusätzliche Reihe an Filtrationsmodulen angeordnet werden kann, die mit je zugeordneten Sammelleitungen in Verbindung stehen. Durch diese Maßnahme kann platzsparend die Durchflussrate der Filtrationsanlage erhöht werden, denn diese baut hierdurch in die Breite und nicht weiter in die Länge, was insgesamt einen kompakteren Aufbau ermöglicht.

Die erfindungsgegenständliche Sammelleitung kann nach mehreren alternativen Ausführungsformen gestaltet sein. So ist es zum Einen möglich, die Sammelleitung einstückig auszubilden, wobei deren horizontaler Durchmesser dem Durchmesser jedes Abzweigs entsprechen kann, der dem Durchmesser der Filtrationsmodule entspricht. Es ist jedoch auch möglich, den Abschnitt der horizontalen Sammelleitung mit einem kleineren Durchmesser auszubilden, um weniger Totvolumen zu erzeugen. Alternativ hierzu ist es auch denkbar, die Sammelleitung aus einzelnen T-Stücken zusammenzusetzen, welche miteinander in der Horizontalen verbunden sind. Diese Maßnahme bietet den Vorteil, dass die sich an der Anzahl der in Reihe befindlichen Filtrationsmodule orientierende Länge der Sammelleitung flexibel aus einzelnen T-Stücken aufgebaut werden kann. Daneben ist es auch möglich, die Sammelleitung aus einzelnen T-Stücken zusammenzusetzen, welche über ein horizontales, durchgehendes Innenrohr miteinander verbunden sind. Hierbei ist zu beachten, dass Dichtringe zwischen dem Außendurchmesser des Innenrohres und der Innenwandung der T-Stücke erforderlich sind, um Undichtheiten zu vermeiden.

Gemäß einer weiteren, die Erfindung verbessernden Maßnahme ist vorgesehen, dass zur optimalen Strömungsverteilung in die Abzweige der Sammelleitung je ein Blendenelement einsetzbar ist. Zur Beeinflussung des jeweiligen Volumenstroms bzw. Druckabfalls können die Öffnungen in den Blendenelementen unterschiedlich groß gestaltet werden, und zwar abhängig von der Position relativ zur Sammelleitung, um eine gleichmäßige Beaufschlagung der Filtrationsmodule zu gewährleisten. Anstelle einer einzigen Öffnung pro Blende kann der Gesamtöffnungsquerschnitt auch über mehrere einzelne kleine nebeneinander angeordnete Öffnungen pro Blende erzeugt werden.

Alternativ zu einzelnen Blendenelementen ist es jedoch auch möglich, zur optimalen Strömungsverteilung die Abzweige der Sammelleitung direkt mit Öffnungen kleineren Durchmessers auszubilden. Insoweit werden die Öffnungen direkt in der Sammelleitung erzeugt. Auch hier können die Durchmesser der Öffnungen zum dem Anschluss gegenüberliegenden Ende der Sammelleitung hin, d.h. mit der Länge der Sammelleitung, zunehmen, um eine optimale Strömungsverteilung zu erreichen. Zu diesem Zwecke kann auch der Querschnitt der Sammelleitung oder der Filtratsammelleitung selbst entlang der Länge variieren, insbesondere in Richtung des dem Anschluss gegenüberliegenden Endes abnehmen.

Die im Rahmen der Erfindung verwendeten Sammelleitungen sind vorzugsweise aus Kunststoff, wie Polyethylen, Polyvinylchlorid, Polypropylen hergestellt. Es ist jedoch auch möglich, die Sammelleitungen aus einem Metall - beispielsweise Edelstahl - herzustellen. Die Materialwahl richtet sich nach den chemischen Eigenschaften der zu filtrierenden Flüssigkeit.

Vorzugsweise sind die Abzweige der Sammelleitung mit der Stirnseite des je korrespondierenden Filtrationsmoduls lösbar über Rohrverbinder, insbesondere einer Muffe, oder über Victaulic-Kupplungen verbunden. Diese Verbindungselemente ermöglichen eine axiale Längsausdehnung der einzelnen Filtrationsmodule aufgrund von beispielsweise Temperaturdifferenzen.

Es ist jedoch auch denkbar, die Abzweige der Sammelleitungen mit der Stirnseite des je korrespondierenden Filtrationsmoduls unlösbar durch Kleben oder Schweißen zu verbinden. Sind die Verbindungselemente in der Lage axiale Kräfte aufzunehmen, wird kein zusätzliches Gestell benötigt. Auch eine Kombination verschiedenartiger Verbindungselemente ist denkbar.

Falls die an dieser Stelle gewählten Verbindungsmittel jedoch nicht Axialkräfte aufnehmen können, wird vorgeschlagen, dass zur Aufnahme von axial der Filtrationsmodule auftretenden Kräften ein Gestell verwendet wird, das vorzugsweise aus einzelnen beabstandet zueinander angeordneten, im Wesentlichen doppel- T-förmigen Aufnahmerahmen bestehen, die an die endseitigen Querstreben einander zugewandte Aufnahmeelemente aufweisen. Natürlich kann das Gestell auch anders ausgebildet sein - beispielsweise rahmenartig - solange es in der Lage ist, den beschriebenen Einsatzzweck zu erfüllen.

Gemäß einer weiteren die Erfindung verbessernden Maßnahme wird vorgeschlagen, dass die Filtratabläufe einander gegenüberliegender oder schräg gegenüberliegender Filtrationsmodule einander zugewandt angeordnet sind und über eine T- förmige Verbindungsleitung miteinander und mit einer Filtratsammelleitung in Verbindung stehen. Somit werden die Abläufe der Filtrationsmodule zur Erzielung eines kompakten Aufbaus der Filtrationsanlage nach innen gerichtet. Verbindet die Verbindungsleitung schräg gegenüberliegende Filtrationsmodule miteinander, so ist diese Verbindung zwischen benachbarten Filtrationsmodulen hindurch von außen sichtbar. Wird nun diese Verbindungsleitung zumindest teilweise transparent ausgeführt, können darin befindliche Luftblasen erkannt werden, was eine einfache Integritätsmessung ermöglicht. Des Weiteren kann durch diese Maßnahme der Abstand der einzelnen Reihen von Filtrationsmodulen zueinander kleiner ausgeführt werden, was einer kompakteren Bauform zu Gute kommt.

Die Filtratsammelleitung, in welche die einzelnen T- förmigen Verbindungsleitungen einmünden, wird vorzugsweise oberhalb zweier benachbarter Sammelleitungen und parallel hierzu verlaufend angeordnet. Diese Maßnahme ergibt eine kompakte und stabile Konstruktion.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Fig.1: eine perspektivische Ansicht einer Filtrationsanlage mit zwei Reihen von Filtrationsmodulen,
- Fig.2: eine stirnseitige Ansicht der Filtrationsanlage nach Fig.1,
- Fig.3: eine perspektivische Ansicht einer weiteren Filtrationsanlage mit vier Reihen von Filtrationsmodulen,
- Fig.4: eine stirnseitige Ansicht der Filtrationsanlage nach Fig.3,
- Fig.5: eine perspektivische Ansicht einer Ausführungsform des Gestells für die Filtrationsanlage nach Fig.1,
- Fig.6: eine Ansicht von unten auf eine Filtrationsanlage mit schräg verlaufenden Verbindungsleitungen,
- Fig.7: eine Draufsicht auf eine Filtrationsanlage mit gerade verlaufenden Verbindungsleitungen,
- Fig.8: ein Längsschnitt durch eine Sammelleitung nach einer ersten Ausführungsform,
- Fig.9: ein Längsschnitt durch eine Sammelleitung nach einer zweiten Ausführungsform,
- Fig.10: ein Längsschnitt durch eine Sammelleitung nach einer dritten Ausführungsform, und
- Fig.11: ein Längsschnitt durch eine Sammelleitung nach einer vierten Ausführungsform.

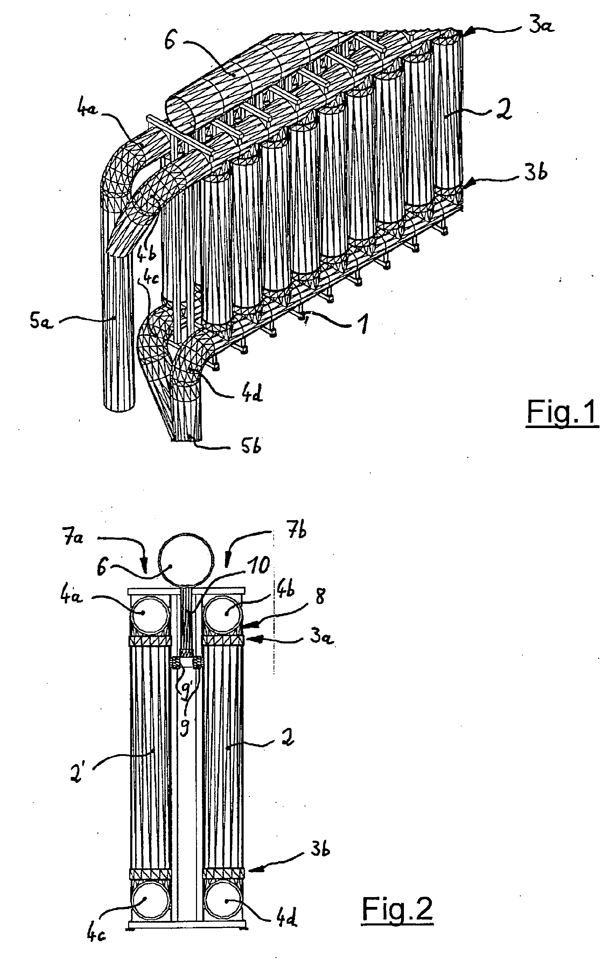

Die in Fig.1 dargestellte Filtrationsanlage besteht aus je einer, beidseits eines Gestells 1 vertikal in Reihe angeordneten Filtrationsmodulen 2, an deren beiden Stirnseiten je ein Zulauf 3a und 3b für die zu filtrierende Flüssigkeit angeordnet ist. Die Zuläufe 3a und 3b sind durch die Stirnseiten der zylindrischen Filtrationsmodule 2 gebildet und münden in jeweils zugeordnete Sammelleitungen 4a-4d, von denen je zwei Sammelleitungen 4a, 4b und 4c, 4d an der Oberseite bzw. Unterseite der Filtrationsanlage angeordnet sind und sich längs des Gestells 1 erstrecken. Die oberen Sammelleitungen 4a und 4b münden in eine obere Hauptsammelleitung 5a, wogegen die unteren beiden Sammelleitungen 4c und 4d in eine untere Hauptsammelleitung 5b münden. Über die Hauptsammelleitungen 5a und 5b wird den in der Filtrationsanlage parallel geschalteten einzelnen Filtrationsmodulen 2 die zu filtrierende Flüssigkeit zugeleitet. Das Filtrat verlässt die Filtrationsmodule 2 über entsprechende - hier nicht erkennbare - Abläufe und wird in einer oberen Filtratsammelleitung 6 gesammelt und zur weiteren Verwendung abgeleitet.

Jedes Filtrationsmodul 2 enthält ein Bündel von rohrförmigen Ultrafiltrations membranen mit mehreren Kapillaren, durch welches die zu filtrierende Flüssigkeit über die Zuläufe 3a und 3b entweder gleichzeitig oder abwechselnd gepumpt wird und über die poröse Materialstruktur gefiltert durch die Wandung hindurch nach außen dringt. Das sich hierdurch im Inneren des Filtrationsmoduls 2 ansammelnde Filtrat wird anschließend abgeführt. Von Zeit zu Zeit ist es erforderlich, die Filtrationsmembranen von den durch die Filtration hieran haftenden Rückständen zu befreien, was durch Rückspülung - also Umkehr der Flussrichtung - erfolgt. In diesem Falle bildet der Zulauf 3a und/oder 3b dann den Ablauf für die Flüssigkeit mit den abgelösten Rückständen. Im normalen Filtrationsbetrieb brauchen nicht beide Zuläufe 3a und 3b mit der zu filtrierenden Flüssigkeit beaufschlagt werden. Es ist hinreichend, wenn einer der Zuläufe 3a oder 3b genutzt wird. Dies bietet den Vorteil, dass der jeweils ungenutzte Zulauf 3b bzw. 3a für die Rückspülung genutzt werden kann, so dass die Schmutzpartikel innerhalb der Filtrationsanlage nicht hin- und hergespült werden.

Die Fig.2 verdeutlicht die Lage der Anschlüsse an den Filtrationsmodulen 2. Entlang der Stirnseite jeder Reihe 7a und 7b der Filtrationsmodulen 2 verläuft eine je zugeordnete Sammelleitung 4a-4d. Das je zugeordnete Filtrationsmodul 2 ist über orthogonal zur Längserstreckung der Sammelleitungen 4a-4d angeordnete Abzweige 8 direkt an die Sammelleitung 4a-4d anschließbar.

Einander gegenüberliegend angeordnete Filtrationsmodule 2, 2' besitzen einander zugewandte Abläufe 9, 9', welche über eine T-förmige Verbindungsleitung 10 miteinander und mit der Filtratsammelleitung 6 verbunden sind. Die Filtratsammelleitung 6 verläuft oberhalb und parallel zu den beiden oberen Sammelleitungen 4a und 4b.

Die Sammelleitungen 4a-4d, die Filtratsammelleitung 6 sowie die Gehäuse der Filtrationsmodule 2 bestehen in diesem Ausführungsbeispiel aus Kunststoff. Die zu jedem Filtrationsmodul 2 von den Sammelleitungen 4a-4d abgehenden Abzweige 8a, 8b sind mit der Stirnseite der korrespondierenden Filtrationsmodule 2 hier über Rohrverbinder verbunden.

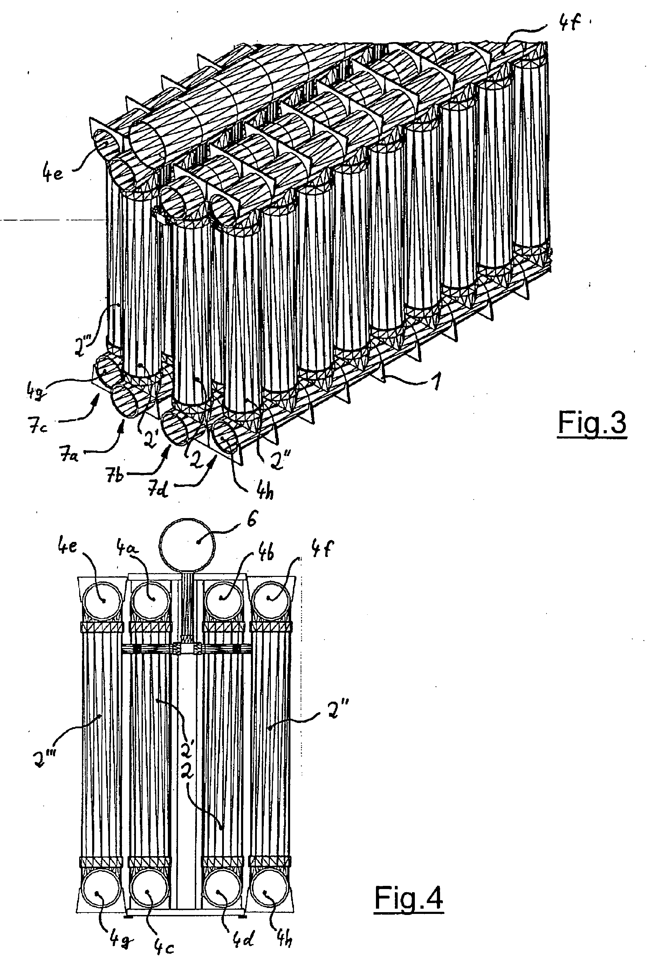

Gemäß der in Fig.3 dargestellten Ausführungsform ist neben jeder beidseits des Gestells 1 angeordneten Reihe 7a und 7b an Filtrationsmodulen 2, 2' eine außenliegenden zusätzliche Reihe 7c, 7d an Filtrationsmodulen 2" und 2"' angeordnet. Diese Reihen 7c und 7d stehen mit je zugeordneten oberen und unteren Sammelleitungen 4e-4h in Verbindung. Mit dieser Ausführungsform erfolgt eine Parallelschaltung weiterer Filtrationsmodule 2 zur Erhöhung der Durchflussrate der Filtrationsanlage.

Aus Fig.4 geht die Anordnung der entlang der Stirnseiten jeder zusätzlichen Reihe 7c und 7d vorgesehene Sammelleitungen 4e-4h hervor, welche nach demselben Prinzip wie bei der vorstehend beschriebenen Ausführungsform erfolgt.

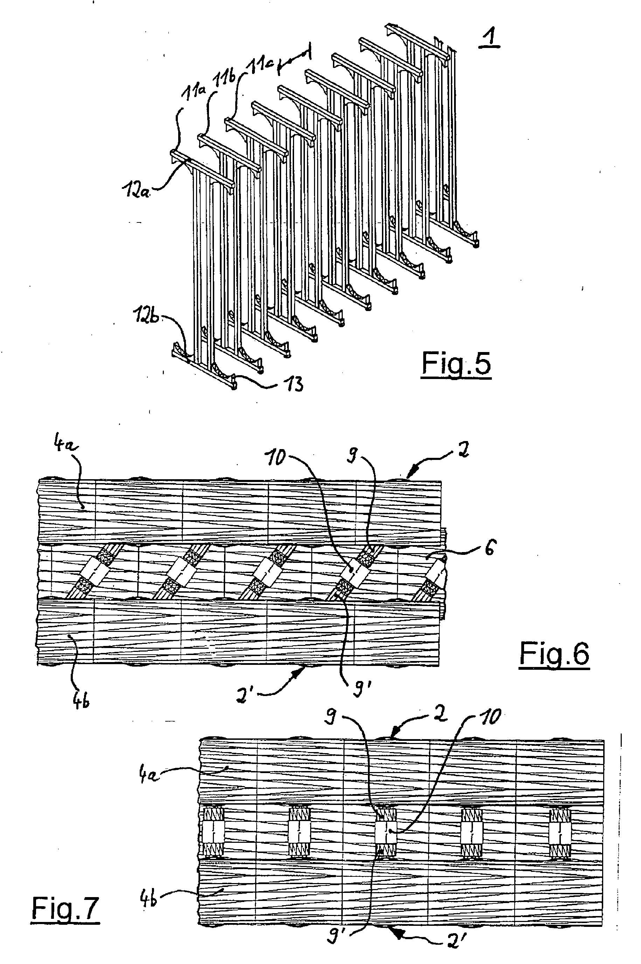

Aus Fig.5 ist der Aufbau eines Gestells 1 der Filtrationsanlage einzeln ersichtlich. Das Gestell 1 besteht aus einzelnen beabstandet zueinander angeordneten, im Wesentlichen doppel-T-förmigen Aufnahmerahmen 11a, 11b, 11c, die an je endseitigen Querstreben 12a und 12b einander zugewandte Aufnahmeelemente 13 zur formschlüssigen Aufnahme über die - hier nicht weiter dargestellten - oberen und unteren Sammelleitungen aufweisen.

Gemäß Fig.6 sind die Abläufe 9, 9' schräg gegenüberliegender Filtrationsmodule 2, 2' miteinander über je T-förmige Verbindungsleitungen 10 verbunden, welche in die Filtratsammelleitung 6 ausmünden. Jede Verbindungsleitung 10 ist hier transparent und kann hinsichtlich Luftblasenentwicklung von außen her kontrolliert werden.

Nach Fig.7 sind gemäß einer weiteren Ausführungsvariante die Abläufe 9, 9' einander direkt gegenüberliegender Filtrationsmodule 2, 2' miteinander über die T-förmigen Verbindungsleitung 10 verbunden. Diese sind hier ebenfalls transparent.

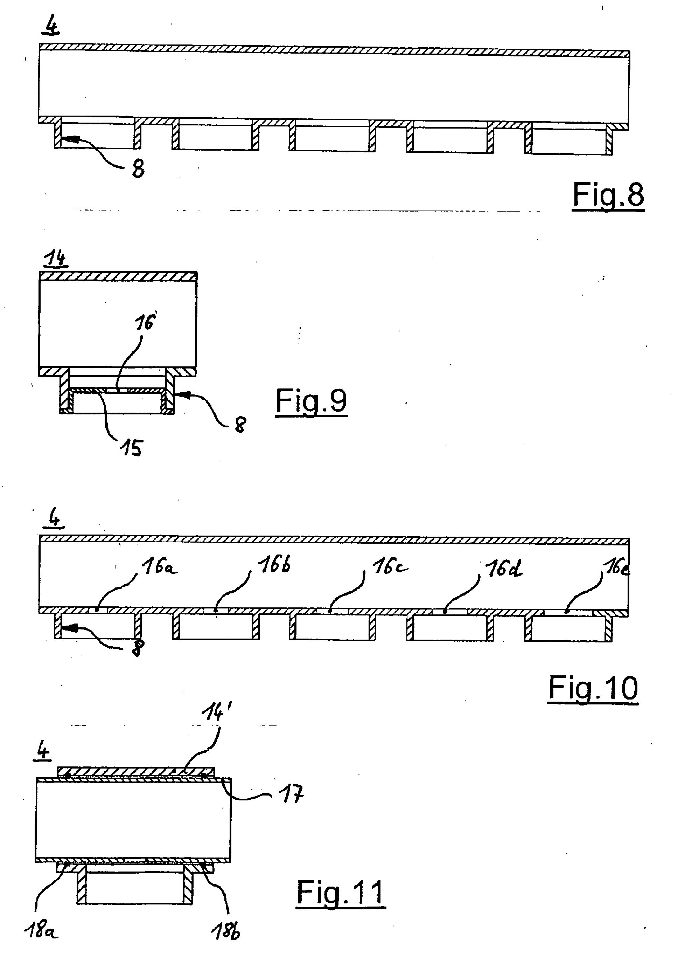

Die in der Fig.8 gezeigte Ausführungsvariante einer Sammelleitung 4 ist einstückig aus Kunststoff im Spritzgussverfahren geformt, wobei deren horizontaler Durchmesser hier gleich dem Durchmesser jedes Abzweigs 3 ist. Der Durchmesser der Abzweige 3 entspricht jeweils dem Durchmesser der hier anzuschließenden - nicht weiter dargestellten - Filtrationsmodule.

In der Fig.9 ist ein T-Stück 14 dargestellt, welches durch Aneinanderreihen einzelner gleichartiger T-Stücke 14 eine Sammelleitung 4 bildet. Die einzelnen T-Stücke 14 können durch Schweißen miteinander verbunden werden. Zur Strömungsverteilung ist in dem Abzweig 8 ein Blendenelement 15 eingesetzt, dessen Öffnung 16 entsprechend der gewünschten strömungsdynamischen Eigenschaften dimensioniert ist.

Gemäß Fig.10 kann auch eine einstückige Sammelleitung 4 im Bereich ihrer Abzweige 8 Öffnungen 16a-16e kleineren Durchmessers zur Anpassung der Strömungsdynamik aufweisen. Zu diesem Zwecke nimmt der Durchmesser der Öffnung 16a-16e zu dem den Anschluss der Sammelleitung gegenüberliegenden Ende hin zu.

Nach der in Fig.11 dargestellten Ausführungsvariante einer Sammelleitung 4 kann diese auch aus einzelnen T-Stücken 14' bestehen, die über ein horizontal durchgehendes Innenrohr 17 miteinander verbunden sind. Zwischen dem Innerohr 17 und dem T-Stück 14' sind Dichtringe 18a und 18b vorgesehen.

Es ist auch denkbar, Filtrationsanlagen mit mehr als zwei oder vier Reihen von Filtrationsmodulen auszustatten. Die erfindungsgemäße Anschlusstechnik eignet sich in besonderer Weise für eine flexible Dimensionierung von Filtrationsanlagen hinsichtlich der Anzahl an gewünschten Filtrationsmodulen. Ebenso ist es möglich mehrere einzelne Filtrationsanlagen mit Rohrkupplungen auf einzelne Weise zu verschalten, um die Kapazität zu erhöhen. Anstelle eines Gestells können auch beispielsweise Bügel und Bänder zur Aufnahme der erwähnten Axialkräften zum Einsatz kommen. Die einzelnen Filtrationsmodule brauchen nicht streng vertikal in der Filtrationsanlage angeordnet sein. Eine leichte Schrägstellung, die hier ebenfalls unter dem Begriff verstanden wird, erleichtert die Entlüftung.

### Bezugszeichenliste

- **1**: Gestell
- **2**: Filtrationsmodul
- **3**: Zulauf
- **4**: Sammelleitung
- **5**: Hauptsammelleitung
- **6**: Filtratsammelleitung
- **7**: Reihe
- **8**: Abzweig
- **9**: Ablauf
- **10**: Verbindungsleitung
- **11**: Aufnahmerahmen
- **12**: Querstrebe
- **13**: Aufnahmeelement
- **14**: T-Stück
- **15**: Blendenelement
- **16**: Öffnung
- **17**: Innenrohr
- **18**: Dichtring

## Patentansprüche

1. Filtrationsanlage mit mehreren vertikal in Reihe (7a, 7b) angeordneten Filtrationsmodulen (2), an deren beiden Stirnseiten je ein Zulauf (3a,3b) für die zu filtrierende Flüssigkeit angeordnet ist und pro Reihe (7a, 7b) in je zugeordnete sich längs erstreckende Sammelleitungen (4a-4d) münden, wobei jedes Filtrationsmodul (2) mindestens einen Ablauf (9, 9') für das Filtrat ausweist, welcher in eine Filtratsammelleitung (6) münden, wobei entlang der Stirnseiten jeder Reihe (7a, 7b) von Filtrationsmodulen (2) eine Sammelleitung (4a-4d) verläuft, die jeder Stirnseite der Filtrationsmodule (2) zugeordnete Abzweige (8) aufweist, über welche das zugeordnete Filtrationsmodul (2) direkt anschließbar ist,
**dadurch gekennzeichnet, dass** die Filtratsammelleitung (6) oberhalb und parallel zu den oberen zwei benachbarten Sammelleitungen (4a, 4b) verläuft.

2. Filtrationsanlage nach Anspruch 1,
**dadurch gekennzeichnet, dass** neben jeder Reihe (7a,7b) an Filtrationsmodulen (2,2') eine zusätzliche Reihe (7c, 7d) an Filtrationsmodulen angeordnet ist, die mit je zugeordneten Sammelleitungen (4e-4h) in Verbindung stehen.

3. Filtrationsanlage nach Anspruch 1,
**dadurch gekennzeichnet, dass** die Sammelleitung (4) einstückig geformt ist, wobei deren horizontaler Durchmesser gleich oder kleiner dem Durchmesser jedes Abzweigs (8) ist, der dem Durchmesser der Filtrationsmodule (2) entspricht.

4. Filtrationsanlage nach Anspruch 1,
**dadurch gekennzeichnet, dass** die Sammelleitung (4) aus einzelnen T-Stücken (14) zusammengesetzt ist, die horizontal miteinander verbunden sind.

5. Filtrationsanlage nach Anspruch 1,
**dadurch gekennzeichnet, dass** die Sammelleitung (4) aus einzelnen T-Stücken (14') zusammengesetzt ist, die über ein horizontal durchgehendes Innenrohr (17) miteinander verbunden sind.

6. Filtrationsanlage nach Anspruch 1,
**dadurch gekennzeichnet, dass** zur Strömungsverteilung in die Abzweige (8) der Sammelleitung je ein Blendenelement (1,5) einsetzbar ist.

7. Filtrationsanlage nach Anspruch 1,
**dadurch gekennzeichnet, dass** zur Strömungsverteilung die Abzweige (8) der Sammelleitung (4) Öffnungen (16a-16e) kleineren Durchmessers aufweisen.

8. Filtrationsanlage nach Anspruch 7,
**dadurch gekennzeichnet, dass** die Durchmesser der Öffnungen (16a-16e) zum dem Anschluss gegenüberliegenden Ende der Sammelleitung (4) hin zunehmen.

9. Filtrationsanlagen nach Anspruch 1,
**dadurch gekennzeichnet, dass** der Querschnitt der Sammelleitung (4) und/oder der Querschnitt der Filtratsammelleitung (6) zu dem Anschluss gegenüberliegenden Ende hin abnimmt.

10. Filtrationsanlage nach Anspruch 1,
**dadurch gekennzeichnet, dass** die Sammelleitungen (4a-4d) aus Kunststoff oder aus einem Metall bestehen.

11. Filtrationsanlage nach Anspruch 1,
**dadurch gekennzeichnet, dass** die Abzweige (8) der Sammelleitung (4a-4d) mit der Stirnseite des je korrespondierenden Filtrationsmoduls (2) lösbar über Rohrverbinder, Muffe oder Victaulic-Kupplungen verbunden sind.

12. Filtrationsaulage nach Anspruch 11,
**dadurch gekennzeichnet, dass** die Rohrverbinder derart ausgebildet sind, dass diese Axialkräfte aufnehmen, so dass ein Gestell zur Aufnahme solcher Axialkräfte entbehrlich ist.

13. Filtrationsanlage nach Anspruch 10,
**dadurch gekennzeichnet, dass** die Rohrverbinder derart ausgebildet sind, dass diese keine Axialkräfte aufnehmen, so dass ein Gestell (1) zur Aufnahme solcher Axialkräfte erforderlich ist.

14. Filtrationsanlage nach Anspruch 1,
**dadurch gekennzeichnet, dass** die Abzweige (8) der Sammelleitung (4a-4d) mit der Stirnseite des je korrespondierenden Filtrationsmoduls (2) unlösbar durch Kleben oder Schweißen verbunden sind.

15. Filtrationsanlage nach Anspruch 13,
**dadurch gekennzeichnet, dass** das Gestell (1) aus einzelnen beabstandet zueinander angeordneten, im wesentlichen doppel-T-förmigen Aufhahmerahmen (11a, 11b, 11c) besteht, die je an den endseitigen Querstreben (12a, 12b) einander zugewandte Aufnahmeelemente (13) für die Sammelleitung (4) zur Aufnahme von Axialkräften aufweist.

16. Filtrationsanlage nach Anspruch 1,
**dadurch gekennzeichnet, dass** die Abläufe (9, 9') einander gegenüberliegender oder schräg gegenüberliegender Filtrationsmodule (2, 2') einander zugewandt angeordnet sind und über eine transparente T-förmige Verbindungsleitung (10) miteinander und mit einer Filtratsammelleitung (6) in Verbindung stehen.

## Claims

1. Filtration system with several filtration modules (2), arranged vertically in a row (7a,7b), on both of whose sides an inflow pipe (3a,3b) is arrayed for the fluid to be filtered, and which open out into individually allocated collecting pipes (4a-4d) running lengthwise per row (7a,7b), whereby each filtration module (2) has for the filtrate at least one outlet port (9, 9'), which empties into a filtrate collecting pipe (6), whereby running along the sides of each row (7a,7b) of filtration modules (2) is a collecting pipe (4a-4d) that has branch pipes (8) allocated to said pipe on each side of the filtration module (2) via which the allocated filtration module (2) is directly connectable,
**characterized in that** the filtrate collecting pipe (6) runs above and parallel to the upper two adjacent collecting pipes (4a,4b).

2. Filtration system in accordance with Claim 1,
**characterized in that**, next to each row (7a,7b) of filtration modules (2,2'), an additional row (7c,7d) of filtration modules is arranged, each of which is connected with individually allocated collecting pipes (4e-4h).

3. Filtration system in accordance with Claim 1,
**characterized in that** the collecting pipe (4) is integrally formed, whereby its horizontal diameter is equal to or less than the diameter of each branch pipe (8), which in turn corresponds to the diameter of the filtration module (2).

4. Filtration system in accordance with Claim 1,
**characterized in that** the collecting pipe (4) consists of individual branch pipe tees (14) that are horizontally connected with one another.

5. Filtration system in accordance with Claim 1,
**characterized in that** the collecting pipe (4) is composed of individual branch pipe tees (14') that are connected with one another via a horizontal end-to-end inner pipe (17).

6. Filtration system in accordance with Claim 1,
**characterized in that** one screen (15) is used for the flow distribution into the branch pipes (8) of the collecting pipe.

7. Filtration system in accordance with Claim 1,
**characterized in that** the branch pipes (8) of the collecting pipe (4) have openings (16a-16e) with smaller diameters for the flow distribution.

8. Filtration system in accordance with Claim 1,
**characterized in that** the diameter of the openings (16a-16e) increase as they run toward the other end of the collecting pipe (4) opposite the junction.

9. Filtration systems in accordance with Claim 1,
**characterized in that** the cross-sectional area of the collecting pipe (4) and/or the cross-sectional area of the filtrate collecting pipe (6) decrease running toward the end located opposite the junction.

10. Filtration system in accordance with Claim 1,
**characterized in that** the collecting pipes (4a-4d) are composed of plastic or metal.

11. Filtration system in accordance with Claim 1,
**characterized in that** the branch pipes (8) of the collecting pipe (4a-4d) are each connected with the front side of the corresponding filtration module (2) via detachable pipe connectors, pipe collars, or Victaulic couplers.

12. Filtration system in accordance with Claim 11,
**characterized in that** the pipe connector is formed in such a way as to absorb axial forces so that a support frame for absorbing such axial forces is rendered unnecessary.

13. Filtration system in accordance with Claim 10,
**characterized in that** the pipe connector is formed such that it absorbs no axial forces, making a support frame (1) for absorbing such axial forces necessary.

14. Filtration system in accordance with Claim 1,
**characterized in that** the branch pipes (8) of the collecting pipe (4a-4d) are non-detachably connected with the front side of the corresponding filtration module (2) via glue or welding.

15. Filtration system in accordance with Claim 13,
**characterized in that** the support frame (1) is composed essentially of double T-shaped absorption frames (1,1a,11b,11c) which are individually spaced apart from one another and which each have - on the stabilizer bars (12a,12b) located on the ends - facing absorption elements for the collecting pipe (4) in order to absorb axial forces.

16. Filtration system in accordance with Claim 1,
**characterized in that** the outlet ports (9,9') of filtration modules (2,2') located directly or diagonally opposite each other are facing each other and are connected with each other and with a filtrate collecting pipe (6) via a transparent T-shaped connecting pipe (10).

## Revendications

1. Installation de filtration comprenant plusieurs modules de filtration (2) agencés verticalement en rangées (7a, 7b), avec une arrivée respective (3a, 3b) pour le liquide à filtrer, agencées sur les deux faces frontales des modules, et débouchant pour chaque rangée (7a, 7b) dans des conduites de collecte respectivement associées (4a-4d) s'étendant dans le sens de la longueur, dans laquelle chaque module de filtration (2) comprend au moins une sortie (9, 9') pour le filtrat, les sorties débouchant dans une conduite de collecte de filtrat (6), et dans laquelle le long des faces frontales de chaque rangée (7a, 7b) de modules de filtration (2) s'étend une conduite de collecte (4a-4d) qui comprend des ramifications (8) associées à chaque face frontale des modules de filtration (2) et via lesquelles le module de filtration associé (2) peut être directement raccordé,
**caractérisée en ce que** la conduite de collecte de filtrat (6) s'étend au-dessus et parallèlement aux deux conduites de collecte voisines supérieures (4a, 4b).

2. Installation de filtration selon la revendication 1,
**caractérisée en ce que**, à côté de chaque rangée (7a, 7b) de modules de filtration (2, 2'), est agencée une rangée supplémentaire (7c, 7d) de modules de filtration qui communiquent avec des conduites de collecte respectives associées (4e-4h).

3. Installation de filtration selon la revendication 1,
**caractérisée en ce que** la conduite de collecte (4) est formée d'un seul tenant, son diamètre horizontal étant égal ou inférieur au diamètre de chaque ramification (8), lequel correspond au diamètre des modules de filtration (2).

4. Installation de filtration selon la revendication 1,
**caractérisée en ce que** la conduite de collecte (4) est composée de pièces individuelles en T (14), qui sont reliées horizontalement les unes aux autres.

5. Installation de filtration selon la revendication 1,
**caractérisée en ce que** la conduite de collecte (4) est composée de pièces individuelles en T (14'), qui sont reliées les unes aux autres via un tube intérieur horizontal traversant (17).

6. Installation de filtration selon la revendication 1,
**caractérisée en ce que**, pour la répartition d'écoulement dans les ramifications (4) de la conduite de collecte, un élément à diaphragme (15) peut être mis en place.

7. Installation de filtration selon la revendication 1,
**caractérisée en ce que**, pour la répartition d'écoulement, les ramifications (8) de la conduite de collecte (4) présentent des ouvertures (16a-16e) de plus petit diamètre.

8. Installation de filtration selon la revendication 7,
**caractérisée en ce que** le diamètre des ouvertures (16a-16e) augmente vers l'extrémité de la conduite de collecte (4) à l'opposé du raccordement.

9. Installation de filtration selon la revendication 1,
**caractérisée en ce que** la section de la conduite de collecte (4) et/ou la section de la conduite de collecte de filtrat (6) diminue vers l'extrémité opposée au raccordement.

10. Installation de filtration selon la revendication 1,
**caractérisée en ce que** les conduites de collecte (4a-4d) sont en matière plastique ou en métal.

11. Installation de filtration selon la revendication 1,
**caractérisée en ce que** les ramifications (8) de la conduite de collecte (4-4d) sont reliées à la face frontale du module de filtration correspondant respectif (2) de manière détachable via des connecteurs tubulaires, des manchons, ou des raccords "Victaulic".

12. Installation de filtration selon la revendication 11,
**caractérisée en ce que** les connecteurs tubulaires sont réalisés de telle façon que ceux-ci encaissent des forces axiales, de sorte que l'on peut se passer d'un bâti pour encaisser de telles forces axiales.

13. Installation de filtration selon la revendication 10,
**caractérisée en ce que** les connecteurs tubulaires sont réalisés de telle manière que ceux-ci n'encaissent aucune force axiale, de sorte qu'un bâti (1) est nécessaire pour encaisser de telles forces axiales.

14. Installation de filtration selon la revendication 1,
**caractérisée en ce que** les ramifications (8) de la conduite de collecte (4a-4d) sont reliées de manière non détachable à la face frontale du module de filtration correspondant respectif (2), par collage ou par soudure.

15. Installation de filtration selon la revendication 13,
**caractérisée en ce que** le bâti (1) est constitué par des cadres récepteurs (11a, 11b, 11c) individuels, agencés à distance les uns des autres et sensiblement en forme de double T, qui comprennent respectivement au niveau des traverses terminales (12a, 12b), des éléments récepteurs (13) orientés les uns vers les autres pour la conduite de collecte (4) afin d'encaisser des forces axiales.

16. Installation de filtration selon la revendication 1,
**caractérisée en ce que** les sorties (9, 9') de modules de filtration (2, 2') opposés face à face ou opposés en oblique, sont agencées en étant tournées les uns vers les autres, et communiquent les unes avec les autres et avec une conduite de collecte de filtrat (6) via une conduite de liaison transparente en forme de T (10).
